# EUROPEAN PATENT APPLICATION

(11) **EP 2 045 443 A2**
(43) Date of publication of application: **08.04.2009**
(21) Application number: 08164549.1
(22) Date of filing: 18.09.2008
(51) Int. Cl.: F01D 5/30, F01D 5/34

(54) **Disk Rotor and Method of Manufacture**

(30) Priority: 04.10.2007 US 867346
(71) Applicant: General Electric Company, Schenectady, NY 12345 (US)
(72) Inventor: Cairo, Ronald Ralph, Greer, SC 29650 (US); Dimascio, Paul Stephen, Greer, SC 29650 (US)
(74) Representative: Gray, Thomas

(57) **Abstract**

A disk rotor (100) comprises a hub (106, 208, 306) having a bore, and a plurality of spoke segments (104, 200, 300) radially extending from the hub, each spoke segment including a base portion (202, 308) being attached to the hub and a rim portion (204, 304), wherein the rim portion includes one or more airfoils (102, 206, 302) integrally formed thereon, the plurality of spoke segments collectively forming a ring.

## Description

The present disclosure relates generally to disk rotors, and, more particularly, to rotors having unique geometries for compressor or turbine applications.

Typically in a compressor or turbine application, a rotor or a plurality of rotors are disposed in a shroud assembled circumferentially about an axial flow engine axis. The stationary shroud and rotor confines combustion gases to the gas flow path so that the combustion gas is utilized with maximum efficiency to turn the rotor. A typical rotor comprises a plurality of airfoils (i.e., rotor blades) attached to a disk hub.

For some applications, such as in turbine engines, the turbine rotors require high AN² values. AN² values are a turbine rotor standard used to determine the capability of a particular rotor in a particular turbine engine application. "A" stands for the annulus area, i.e., the area swept out by the airfoil portion of the disk rotor. "N" represents the rotational speed of the airfoils. The rotational speed is squared and multiplied by the annulus area to give the AN² value. In order to have high values for turbine applications, the rotors must have long airfoils and/or be driven at high rpm (rotations per minute). In a conventional rotor, the airfoil is mechanically attached to the rim of the disk rotor. The longer the airfoils or the higher the desired rpm of the rotor, the deeper this mechanical attachment must be.

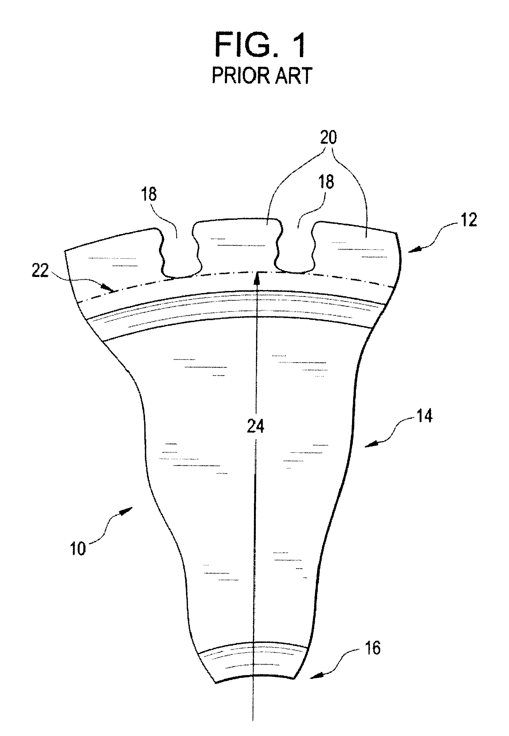

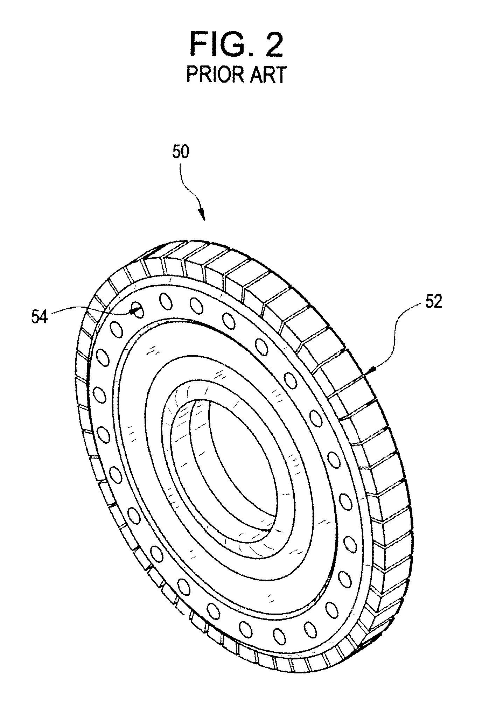

Prior art Figures 1 and 2 illustrates a turbine disk rotor. Prior art Figure 1 is a rotor section 10 of a current disk rotor. The rotor section 10 consists of three regions, the rim 12, the web 14, and the disk hub 16. Airfoils (not shown) are mechanically attached to the rim 12 to complete the turbine rotor assembly. As shown in Figure 1, attachment slots 18 are machined into the rim for mechanical attachment of the airfoils. Between the attachment slots 18 are load transfer lugs 20 that are necessary to transition the airfoil load to the rim 12 and, eventually, to the hub 16. As stated previously, the larger the airfoils, the deeper into the rim 12 the attachment slots 18 extend. Some very large turbine blades require multi-tooth attachments, such as shown in Figure 1. In a multi-tooth attachment, as many as three or more teeth, disposed within the attachment slots 18, are needed to secure the large airfoils to the rim. The attachment slots 18 take away material from the rim 12, which would normally be used to carry the circumferential load of the airfoils. Moreover, the lugs 20 cannot carry load via circumferential (i.e., tangential) stress due to the number and depths of the attachment slots 18, and become what is known as "dead" or parasitic loading. Even further, deeper attachment slots require that the rim have more material to accommodate the slots. In other words, the rim must be radially deeper to enable the required depth of the attachment slots. Again, this added material does not carry load.

For turbine rotors assembled in this current fashion, the only area capable of supporting the circumferential stresses of the airfoils is just below the attachment slots, as indicated by the dashed line 22 in Figure 1. This region is known as the "live rim," and represents the effective outer radial boundary of the load carrying portion of the rim. The live rim radius is indicated by the arrow 24, extending from the hub 16 to the dashed line 22 of the rim 12. All the area at a radius outside the line 22 is incapable of supporting load stresses, and is therefore, considered dead load. By mechanically attaching the airfoils, particularly for high AN² applications, the load carrying capability of the rim is significantly reduced, thereby adding stress to the web and hub of the rotor. Moreover, the rim loses strength in the circumferential direction because the rim is interrupted repeatedly by the airfoil attachment points. Prior art Figure 2 illustrates a full disk rotor 50 having the attachment slots 52 disposed around the rim circumference, and further shows bolt holes 54 which are necessary to fix the individual rotor stage 50 to the rotor assembly in a multi-stage design configuration. The bolt holes 54, like the attachment slots 52, can further reduce the load carrying capacity of the rim.

Accordingly, there remains a need in the art for improvements to disk rotors for compressors and turbines, and particularly to the attachment of airfoils to the disks that will be cost effective, provide maximum turbine efficiency, and can be easily integrated with current turbine designs.

Disclosed herein are disk rotors and a method of manufacturing disk rotors capable of achieving higher AN² values than current disk rotors. In one embodiment, a disk rotor comprises a hub having a bore, and a plurality of spoke segments radially extending from the hub, each spoke segment including a base portion being attached to the hub and a rim portion, wherein the rim portion includes one or more airfoils integrally formed thereon, the plurality of spoke segments collectively forming a ring.

In another embodiment, a disk rotor includes a hub having a bore, a plurality of spoke segments radially extending from the hub, each spoke segment comprising a base portion being attached to the hub and a rim portion, the plurality of spoke segments collectively forming an annular ring, and one or more airfoils attached to the rim portion of each spoke segment.

A method of manufacturing a disk rotor includes attaching a plurality of spoke segments to a hub having a bore, wherein each spoke segment comprises a base portion being attached to hub and a rim portion, wherein the rim portion comprises one or more airfoils, the plurality of spoke segments collectively forming a ring.

The above described and other features are exemplified by the following figures and detailed description, in which:
Figure 1 is a cross sectional view of a prior art disk rotor section with attachment slots for the mechanical attachment of airfoils;
Figure 2 is a perspective view of a prior art disk rotor with attachment slots and bolt holes for the mechanical attachment of airfoils;
Figure 3 is a frontal perspective view of a segment of an exemplary disk rotor having integral airfoils thereon;
Figure 4 is a side perspective view of a spoke segment having an integral airfoil and fixedly attached to a disk hub; and
Figure 5 is another perspective view of an exemplary spoke segment having a beveled shape with airfoils integrally formed thereon.

In one embodiment according to the present invention, a disk rotor having integral airfoils is disclosed. In another embodiment, a method of a manufacturing a disk rotor is disclosed, wherein the airfoils are integral and attached directly to the hub of the disk.

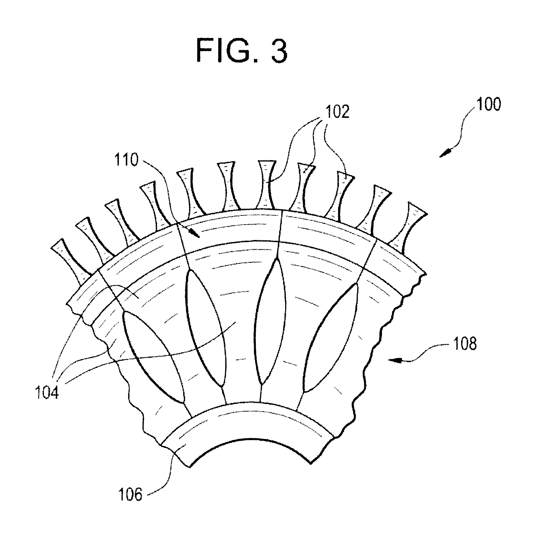

Referring now to Figure 3, there is shown a rotor segment 100 of an exemplary embodiment of a disk rotor for use in a compressor or turbine application. The airfoils (i.e., blades) 102 are integral with the spokes 104. As shown in Figure 3, the airfoil 102 and the spoke 104 form a single part, which can be welded to the hub 106. Each spoke is separated at the typical rim location to transmit airfoil load directly to the hub of the disk rotor.

As described above, current disk rotors comprise a solid rim surrounding a web and a disk hub. The airfoils are then mechanically joined, e.g., by bolting, to attachment slots hollowed out within the rim. The disk rotor as disclosed herein comprises no mechanical attachments between the individual parts. Particularly, the airfoils are integral to the spokes, and the spokes are fixedly attached to the hub of the rotor. A plurality of spoke segments 104 radially extend from the cylindrically shaped hub 106 to form the web 108 and rim 110 regions of the rotor. For example, the rotor segment 100 of Figure 3 includes five spoke segments 104 fixedly attached to the hub 106. Load from the airfoils travels directly into the spoke segments where the load is then transmitted to the hub. The load path of the disk rotor as disclosed herein is significantly different than that of currents disks. In current disk rotors, the centrifugal load from the airfoils is transferred to the live rim by radial and tangential stress, then to the web, and ultimately the hub. The rim has limited ability to carry tangential stress due to the mechanical attachment slots. Moreover, the rim requires enough material to be able to seat and attach the airfoils. This adds weight to the rim. As noted, the added weight, however, is dead or parasitic load. The hub of the rotor ultimately must provide support for the entire rim loading. The improved load path of the disk rotor as described herein, allows the disk rotor to handle the same amount of variable loading as that of a conventional disk, with less material, a lighter weight, at a reduced cost.

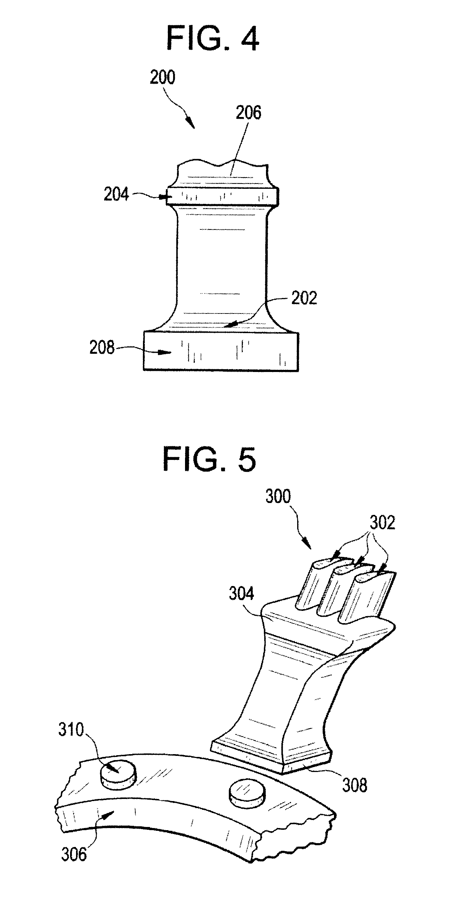

Turning now to Figure 4, an exemplary embodiment of a spoke segment 200 is illustrated. The spoke segment 200 generally includes a base portion 202 and a rim portion 204. In one embodiment, the rim portion 204 includes one or more airfoils 206 integrally formed thereon. In another embodiment, the one or more airfoils 206 are metallurgically attached to the rim portion 204. In such an example, the metallurgical joint between the airfoils and the rim portion can be accomplished by forging, welding, brazing, and the like. While only one airfoil is shown in Figure 4, each spoke segment 200 is capable of including multiple airfoils for manufacturing efficiency. The number of airfoils on each spoke will be determined by the intended application of the finished disk rotor. The spoke segment 200 can be attached, e.g., welded, to a separate disk hub 208 to provide a direct load path from the spoke segment 200 into the hub 208 of the rotor. The spoke segment 200 can be attached to the hub 208 at the base portion 202.

An exemplary embodiment of a spoke segment 300 that is beveled is illustrated in Figure 5. The beveled shape of the spoke segment 300 can help stabilize the airfoils 302. The beveled shape of the spoke segment 300 can begin at the rim portion 304 of the spoke segment 300, wherein a beveled edge that is not perpendicular to the rest of the spoke segment 300. The rim portion 304 will be aligned with a plurality of other spokes having substantially similar rim portions to form the rim of the completed disk rotor. Each spoke segment collectively forms an annular ring with the adjacent spoke segment, eventually forming the rim of the rotor. The beveled shape of the rim portion 304 provides additional stabilization to the rim formed once the plurality of spoke segments are attached to the hub 306. The beveled shape continues from the rim portion 304 of the spoke segment 300 down to base portion 308. Figure 3 illustrates how the beveled shape of each spoke segment 104 corresponds to the adjacent spoke to form the rim 110 and the web 108, and each spoke guides the adjacent spokes under radial motion and modal vibration. The beveled edges of each spoke segment 300 provides a mechanical interlock and continuity to ensure the radial displacement of adjacent spoke segments (not shown) will be consistent under the action of centrifugal loading. Similarly, the beveled features stabilize the spoke segments against lateral, tangential movement, to ensure only radial movement of the spoke segments. In short, the beveled shape of the spoke segments force the individual segments to act as one continuous unit (i.e., structure).

The hub 306 can have a any shape suitable for rotation of the disk rotor. For example, the hub 306 can have a substantially cylindrical shape. The hub 306 can include a bore (not shown). The bore can be positioned within the hub 306 so as to balance the disk rotor. In one example, the bore is centrally located within the hub 306. The disk bore can further include an axle, bearings, a hub shell, and the like. The hub 306 can further include a plurality of lands 310 that aid in the positioning of the spoke segment 300 prior to being welded to the hub 306. The lands 310 can be disposed equidistantly about the outer diameter of the cylindrically shaped hub. The lands 310 provide a mark or map for placement of the spoke segments and can greatly aid in the proper alignment of each spoke segment prior to permanently attaching the segment to the hub. Each land 310 has a unique, non-circular, geometry that mates with a matching recess (not shown) machined or cast into the base of the spoke segment. Since the airfoils are integral with the spoke, it is essential to control the airfoil orientation with respect to a fluid stream. In addition to providing control of airfoil orientation, the lands 310 maintain spoke segment 300 positioning during the subsequent metallurgical bonding, or welding procedure. The unique, no-circular, geometry of the lands 310 prevent the spoke segments from rotating during the joining procedure, and the interlocking nature of the land with the corresponding spoke recess maintains axial and tangential positioning during the joining procedure. In one embodiment, the lands 310 can be integrally formed on the outer diameter of the hub when the hub itself is being shaped. In another embodiment, the lands can be fixedly attached the outer diameter of the cylindrically shaped hub.

Referring again to Figure 5, the airfoils 302 can have any size and shape suitable to the intended application. Moving fluid can act on the airfoils 302, or the airfoils 302 react to the flow, so that they rotate and impart energy to the rotor. The airfoils 302 can have variable geometry that allows efficient operation for a range of fluid-flow conditions. In an exemplary embodiment, the airfoils 302 can have a curvilinear shape to better capture the flow of fluid over the airfoils and turn the rotor. The size of the airfoils 302 will depend on the desired AN² value for the disk rotor, as described above. For example, in an application where the rotor turns at low rpm (low N), e.g., less than 5000 rpm, the airfoils will have a longer length than the airfoils in an application in which the rotor is turning at 15,000 rpm (high N), such as in an aircraft engine. The welded disk rotor as described herein is particularly suited for applications requiring high AN² airfoils. Current disk rotors are capable of getting an AN² value of about 600 to 700 x10⁹ square inches-rpm (in²-rpm). The extra weight of the rim and the resulting dead load due to the deep mechanical attachments of the airfoils is a severe limitation to achieving higher AN² values with a conventionally designed disk rotor. The welded disk rotor described herein is capable of achieving AN² values of greater than or equal to about 1000 x10⁹ in²-rpm; in some cases, greater than or equal to 1200 x10⁹ in²-rpm. The unique geometrical design of the welded spoke disk rotor permits use of the rotor in applications requiring higher AN² values, such as turbine rotors; applications that are presently beyond the capability of current disk rotors.

Suitable high temperature capable materials for the welded disk rotor are those materials that can withstand the elevated temperatures provided by the hot liquid flow path of operation found in applications such as gas turbine engines. Exemplary materials include, but are not limited to, superalloys and steels. Suitable superalloys are typically a nickel-based, iron-based, or a cobalt-based alloy, wherein the amount of nickel, iron, or cobalt in the superalloy is the single greatest element by weight. Illustrative nickel-based superalloys include at least nickel (Ni), and at least one component from the group consisting of cobalt (Co), chromium (Cr), aluminum (Al), tungsten (W), molybdenum (Mo), titanium (Ti), tantalum (Ta), zirconium (Zr), niobium (Nb), rhenium (Re), carbon (C), boron (B), hafnium (Hf), and iron (Fe). Examples of nickel-based superalloys are designated by the trade names Haynes® and Hasteloy® produced by Haynes International, Inc., Incoloy®, Inconel®, Nimonic®, and Udimet® produced by Special Metals Corp., Rene® (e.g., Rene®80, Rene®95, Rene®142, and Rene®N5 alloys) produced by Reade, and include directionally solidified and single crystal superalloys. Illustrative cobalt-base superalloys include Co, and at least one component from the group consisting of Ni, Cr, Al, W, Mo, Ti, and Fe. Examples of cobalt-based superalloys are designated by the trade names Haynes®, Nozzaloy® produced by General Electric, Stellite® produced by Deloro Stellite Co., and Ultimet® materials. Illustrative iron-base superalloys include Fe, and at least one component from the group consisting of Ni, Co, Cr, Al, W, Mo, Ti, and manganese (Mn). Examples of iron based superalloys are designated by the trade names Haynes®, Incoloy®, Nitronic® produced by G.O. Carlson, Inc. Suitable steels include stainless steels such as American Iron and Steel Institute (AISI) steels: AISI 304 stainless steel, 310 stainless steel, AISI 347 stainless steel, AISI 410 stainless steel, Alloy 450 stainless steel, and the like.

In manufacturing the welded disk rotor components (i.e., airfoils, spoke segments, hub, and the like), one or more of the components can first be formed by forging a preform of high temperature capable material such as by closed forging, seamless ring forging, variations thereof, and the like. The particular method for forming the welded disk rotor components is not intended to be limited. Once the components are formed, the spoke segments can be fixedly attached to the outer diameter of the hub. Attachment of the high temperature capable material can be by any means and includes such techniques as welding, strip cladding, brazing, and the like.

One or all of the welded disk rotor parts can be formed from one or more metal ingot pieces. In one embodiment, a cylindrically shaped metal ingot is pressed, either with a machine press or with hammers powered by compressed air, electricity, hydraulics, or steam. As the ingot is pressed, the diameter increases and metal is shaped from its original cylindrical shape to a disk shape. The disk-shaped ingot can then be heat treated and machined to form the desired part. The type of heat treatment to the disk-shaped ingot will depend on the part being produced, as the different parts can require different material properties in order to perform in the high stress and high temperature environments. For example, the spoke segment can be heat treated to provide the metal with a grain structure having high creep strength capability, while the disk hub can be heat treated differently, so that the metal has high strength.

The airfoils are exposed to the highest temperatures as the gas path flows through the individual airfoils. Moreover, because the airfoils exist at the outer circumference of the disk rotor, they are also subject to the greatest amount of centrifugal force. As such, creep strength is an important property for the material of the rim. Creep is the term used to describe the tendency of a material to move or to deform permanently to relieve stresses. It is therefore important, for the rim and airfoil portions of the disk rotor to have high creep strength capability, i.e., to not have a tendency to creep under the heat and stress of the turbine or compressor environment. One method in which to obtain high creep strength capability in a metal is to heat treat the metal. Metallic materials consist of a microstructure of small crystals called "grains" or crystallites. The nature of the grains (i.e. grain size and composition) determines the overall mechanical behavior of the metal. Heat treatment provides an efficient way to manipulate the properties of the metal by controlling rate of diffusion, and the rate of cooling within the microstructure. A fine grain microstructure will improve the creep strength properties of the metal.

Alternatively, load bearing strength is more important to the hub of the disk rotor than creep strength capability. Due to the unique load path of the welded disk rotor, the hub section carries the load of all the material that extends radially therefrom. Whereas strength is an important factor for this component, a different heat treat, or even different material altogether, can be used. A metal having a course grain microstructure typically has sufficient load strength suitable for the hub.

During the forging to the disk rotor, the spoke segment and hub can be pressed and heat treated from separate metal ingots, or the two components can be formed from one forged metal piece, which can undergo a dual heat treatment. The component (or components) can then be machined out to form the features of the disk, such as the hub section or the profile of the disk.

The method of manufacturing the disk rotor further includes fixedly attaching a plurality of spoke segments to the hub, wherein the spoke segments and the airfoil are one solid part. In another embodiment, the airfoil is metallurgically attached to the spoke segment, and together the airfoil and spoke are attached to the disk hub. In yet another embodiment, the spoke segment is positioned on the disk hub with weld lands, in order to ensure the proper spacing/distribution of the spokes around the circumference of the hub.

As described above, the airfoil and the spoke segment can be forged and machined from a single piece of high-temperature material. The advantage of a single airfoil-spoke component is that no mechanical attachment means are necessary, and no seam or joint exists as a potential fail point for the disk rotor. However, in some applications, it can be desirable for the airfoil and the spoke segment to be formed separately and then fixedly attached to one another. Attachment of the spoke segment and airfoil can be by any means capable of forming a metallurgical joint and includes such techniques as weld build up, strip cladding, brazing, and the like. One advantage of having the airfoil and the spoke segment as separate components is the ease of airfoil replacement upon excessive wear or damage. Further, as can be desirable in certain applications; the two components can be formed of different high-temperature materials having different properties, such as creep strength, load bearing strength, and the like.

Attachment of the spoke to the hub can be by any means capable of forming a metallurgical joint and includes such techniques as welding, brazing, and the like. Like the spoke segment and the airfoil, the spoke and the hub can be formed of different material. Unlike current disk rotors, therefore, the disk rotor described herein can be formed of as many as three or more different high-temperature materials. This advantageously enables the disk rotor to have different material capabilities in different regions of the rotor.

In one embodiment, the metallurgical joints of the disk rotor can be welds. Various welding processes such as electron beam, laser, and tungsten inert gas (TIG) can be employed to produce the metallurgical joints. For example, a metal or alloy suitable for creating the metallurgical joint can be melted using a focused electron beam (EB). EB welding is carried out by translating the beam, with respect to the parts to be joined, and locally melting the metallic material. No filler addition or consumable is necessary and welding is achieved in a single pass substantially irrespective of the material thickness. Consequently, the weld quality and properties achievable are controlled by the composition of the metallic material alone.

Nickel alloys, nickel, nickel/copper alloys, and nickel/iron alloys, can be metallurgically joined using the EB welding process. For the disk rotor as described herein, the high temperature alloys mentioned above and designed to have good high temperature creep resistance, can be welded using EB welding processes. In some cases, EB welding can be preferable to arc welding because of the minimal metallurgical disturbance and low thermal strains induced by the EB process. Care should be given to avoid heat affected zone (HAZ) liquation during the welding, as well cracking during post-weld heat treatment of the high-temperature alloys.

In another example, laser welding can be employed to form the metallurgical joint. Laser welding uses a laser to generate light energy that can be absorbed into materials and converted to heat energy. By employing a light beam in the visible or infrared portion of the electromagnetic spectrum, energy can be transmitted from its source to the material using delivery optics which can focus and direct the energy to a very small, precise point. Since the laser emits coherent radiation, the beam of energy has minimal divergence and can travel large distances without significant loss of beam quality or energy. Laser welding is exemplary for efficiently applying thermal energy to small areas. There are two different approaches to laser welding. One is a low-power method, used for relatively thin materials. The other is a high-power approach. In both cases, since filler material is rarely used, a tight fitup between the parts to be welded (in the case of the disk rotor - the spoke segments to the hub, or the airfoils to the spoke segment) is necessary.

TIG welding is yet another example of a means capable of forming the metallurgical joint. Nickel alloys can be fusion welded using gas shielded processes like TIG. The processes are capable of welds that are free of splatter and have low part distortion. The welds can be made with or without filler metal. TIG-welding uses a permanent non-melting electrode made of tungsten. Filler metal is added separately, which can make the process more flexible. Alternating current (AC) TIG-welding often uses argon as a shielding gas. The AC TIG-welding process is a multi purpose process, which also offers additional flexibility. By changing the diameter of the tungsten electrode, welding can be performed with a substantially wide range of heat input at different material thicknesses. Direct current (DC) TIG-welding with a negative electrode is used for welding thicknesses greater than about 4 millimeters (mm). The negative electrode, however, gives a poor oxide cleaning when compared to AC-TIG or metal-inert-gas (MIG) welding processes. Special cleaning of the joint surfaces, therefore, can be necessary. The DC TIG-welding process can use helium shielding gas. Helium shielding gas can provide a better penetration in thicker material sections.

The welding techniques disclosed herein are merely exemplary and are not limiting. The process chosen for forming the metallurgical joints of the disk rotor will vary and can depend on factors such as, without limitation, material characteristics, part thicknesses, part geometry, and the like.

As stated previously, the disk rotor as described herein is capable of achieving higher AN² values than current disk rotors. Moreover, the welded disk rotors as disclosed herein comprise airfoils that are integral to the spoke segments, with the spoke segments fixedly attached to the hub. Load from the airfoils, therefore, is able to travel directly into the spokes where the load is then transmitted to the disk hub. The effective load carrying portion of the rim is improved over current disk rotors because the rim does not require deep mechanical attachment slots for the airfoils. Without multiple attachment slots interrupting the continuity of the rim, the rim of the present disclosure provides greater centrifugal load carrying capability to the rotor using less material. As such, the dead or parasitic loading at the rim is lower than current disk rotors and the welded disk rotor is advantageously able to handle equal or greater amounts of variable external loading (i.e. airfoil loading) with less material. By using less material per disk rotor, material costs, forging and processing costs, and even plant infrastructure costs can be reduced over that of the current disk rotors. Moreover, for aircraft applications, the lighter disk rotors can help improve fuel consumption and increase aircraft flight range by reducing overall engine weight.

Ranges disclosed herein are inclusive and combinable (e.g., ranges of "up to about 25 wt%, or, more specifically, about 5 wt% to about 20 wt%", is inclusive of the endpoints and all intermediate values of the ranges of "about 5 wt% to about 25 wt%," etc.). "Combination" is inclusive of blends, mixtures, alloys, reaction products, and the like. Furthermore, the terms "first," "second," and the like, herein do not denote any order, quantity, or importance, but rather are used to distinguish one element from another, and the terms "a" and "an" herein do not denote a limitation of quantity, but rather denote the presence of at least one of the referenced item. The modifier "about" used in connection with a quantity is inclusive of the stated value and has the meaning dictated by context, (e.g., includes the degree of error associated with measurement of the particular quantity). The suffix "(s)" as used herein is intended to include both the singular and the plural of the term that it modifies, thereby including one or more of that term (e.g., the colorant(s) includes one or more colorants). Reference throughout the specification to "one embodiment", "another embodiment", "an embodiment", and so forth, means that a particular element (e.g., feature, structure, and/or characteristic) described in connection with the embodiment is included in at least one embodiment described herein, and may or may not be present in other embodiments. In addition, it is to be understood that the described elements may be combined in any suitable manner in the various embodiments.

While the invention has been described with reference to a preferred embodiment, it will be understood that various changes may be made and equivalents may be substituted for elements thereof without departing from the scope of the invention. In addition, many modifications may be made to adapt a particular situation or material to the teachings of the invention without departing from essential scope thereof. Therefore, it is intended that the invention not be limited to the particular embodiment disclosed as the preferred mode contemplated for carrying out this invention, but that the invention will include all embodiments falling within the scope of the appended claims.

For completeness, various aspects of the invention are now set out in the following numbered clauses:
1. A disk rotor comprising:
   a hub having a bore; and
   a plurality of spoke segments radially extending from the hub, each spoke segment comprising a base portion being attached to the hub and a rim portion, wherein the rim portion comprises one or more airfoils integrally formed thereon, and the plurality of spoke segments forming a ring.
2. The disk rotor of clause 1, wherein the each spoke segment is beveled.
3. The disk rotor of clause 1, wherein the hub further comprises a plurality of lands disposed equidistantly about an outer diameter of the hub.
4. The disk rotor of clause 1, wherein a selected one or both of the hub and the plurality of spoke segments comprises stainless steel, nickel-based alloy, iron-based alloy, cobalt-based alloy, or a combination comprising at least one of the foregoing metals.
5. The disk rotor of clause 4, wherein the hub comprises a metal different than that of the plurality of spoke segments.
6. The disk rotor of clause 1, wherein the disk rotor has an AN² value of greater than or equal to about 1000 x10⁹ in²-rpm.
7. A method of manufacturing a disk rotor, comprising:
   attaching a plurality of spoke segments to a hub having a bore, wherein each spoke segment comprises a base portion being attached to the hub and a rim portion, wherein the rim portion comprises one or more airfoils, the plurality of spoke segments collectively forming a ring.
8. The method of clause 7, further comprising integrally forming the one or more airfoils on the rim portion of each spoke segment.
9. The method of clause 7, further comprising attaching the one or more airfoils to the rim portion of each spoke segment.
10. The method of clause 7, further comprising forming a selected one or both of the hub and the plurality of spoke segments from a cylindrically shaped metal ingot.
11. The method of clause 7, wherein attaching the plurality of spoke segments further comprises aligning a recess disposed on the base portion of the spoke segment with a land disposed equidistantly about an outer diameter of the hub.
12. The method of clause 7, wherein attaching the plurality of spoke segments to the hub comprises welding, strip cladding, brazing, or a combination comprising at least one of the foregoing.
13. The method of clause 7, wherein a selected one or all of the hub, the plurality of spoke segments, and the one or more airfoils comprises stainless steel, nickel-based alloy, iron-based alloy, cobalt-based alloy, or a combination comprising at least one of the foregoing.
14. A disk rotor, comprising:
   a hub having a bore;
   a plurality of spoke segments radially extending from the hub, each spoke segment comprising a base portion being attached to the hub and a rim portion, the plurality of spoke segments collectively forming an annular ring; and
   one or more airfoils attached to the rim portion of each spoke segment.
15. The disk rotor of clause 14, wherein the each spoke segment is beveled.
16. The disk rotor of clause 14, wherein the hub further comprises a plurality of lands disposed equidistantly about an outer diameter of the hub.
17. The disk rotor of clause 14, wherein a metallurgical joint fixedly attaches the one or more airfoils to the rim portion of each spoke segment.
18. The disk rotor of clause 14, wherein a selected one or all of the hub, the plurality of spoke segments, and the one or more airfoils comprises stainless steel, nickel-based alloy, iron-based alloy, cobalt-based alloy, or a combination comprising at least one of the foregoing metals.
19. The disk rotor of clause 18, wherein the plurality of spoke segments comprises a metal different than that of the one or more airfoils.
20. The disk rotor of clause 14, wherein the disk rotor has an AN² value of greater than or equal to about 1000 x10⁹ in²-rpm.

## Claims

1. A disk rotor (100) comprising:
a hub (106, 208, 306) having a bore;
a plurality of spoke segments (104, 200, 300) radially extending from the hub, each spoke segment comprising a base portion (202, 308) being attached to the hub and a rim portion (204, 304), the plurality of spoke segments collectively forming an annular ring; and
one or more airfoils (102, 206, 302) attached to the rim portion of each spoke segment.

2. The disk rotor 100 of Claim 1, wherein the one or more airfoils (106, 206, 302) are integrally formed on the rim portion (204, 304) of each spoke segment (104, 200, 300).

3. The disk rotor of any one of the preceding claims, wherein the each spoke segment (104, 200, 300) is beveled.

4. The disk rotor of any one of the preceding claims, wherein the hub (106, 208, 306) further comprises a plurality of lands (310) disposed equidistantly about an outer diameter of the hub.

5. The disk rotor of any one of the preceding claims, wherein a selected one or all of the hub (106, 208, 306), the plurality of spoke segments (104, 200, 300), and the one or more airfoils (102, 206, 302) comprises stainless steel, nickel-based alloy, iron-based alloy, cobalt-based alloy, or a combination comprising at least one of the foregoing metals.

6. The disk rotor of any one of the preceding claims, wherein the disk rotor (100) has an AN² value of greater than or equal to about 1000 x10⁹ in²-rpm.

7. A method of manufacturing a disk rotor (100), comprising:
attaching a plurality of spoke segments (104, 200, 300) to a hub (106, 208, 306) having a bore, wherein each spoke segment comprises a base portion (202, 308) being attached to the hub and a rim portion (204, 304), wherein the rim portion comprises one or more airfoils (102, 206, 302), the plurality of spoke segments collectively forming a ring.

8. The method of Claim 7, further comprising integrally forming the one or more airfoils (102, 206, 302) on the rim portion (204, 304) of each spoke segment (104, 200, 300).

9. The method of Claim 7, further comprising attaching the one or more airfoils (102, 206, 302) to the rim portion of each spoke segment (104, 200, 300).

10. The method of any of Claims 7 to 9, further comprising forming a selected one or both of the hub (106, 208, 306) and the plurality of spoke segments (104, 200, 300) from a cylindrically shaped metal ingot.

11. The method of Claim 7 or Claim 8, wherein attaching the plurality of spoke segments (104, 200, 300) further comprises aligning a recess disposed on the base portion (202, 308) of the spoke segment with a land (310) disposed equidistantly about an outer diameter of the hub (106, 208, 306).

12. The method of any of Claims 7 to 9, wherein attaching the plurality of spoke segments (104, 200, 300) to the hub (106, 208, 306) comprises welding, strip cladding, brazing, or a combination comprising at least one of the foregoing.

13. The method of any of Claims 7 to 12, wherein a selected one or all of the hub (106, 208, 306), the plurality of spoke segments (104, 200, 300), and the one or more airfoils comprises stainless steel, nickel-based alloy, iron-based alloy, cobalt-based alloy, or a combination comprising at least one of the foregoing.
